# EUROPEAN PATENT APPLICATION

(11) **EP 3 285 528 A1**
(43) Date of publication of application: **21.02.2018**
(21) Application number: 15888803.2
(22) Date of filing: 16.04.2015
(51) Int. Cl.: H04W 72/04

(54) **INFORMATION TRANSMISSION METHOD, APPARATUS AND SYSTEM BASED ON NON-ORTHOGONAL MULTIPLE ACCESS TECHNIQUE**

(71) Applicant: Fujitsu Limited, Kawasaki-shi, Kanagawa 211-8588 (JP)
(72) Inventor: WANG, Weiwei, Beijing 100025 (CN); ZHANG, Jian, Beijing 100025 (CN); WANG, Xin, Beijing 100025 (CN)
(74) Representative: Haseltine Lake LLP
(86) International application number: PCT/CN2015/076722
(87) International publication number: WO 2016/165098

(57) **Abstract**

Embodiments of this disclosure provide an information transmission method and apparatus based on a non-orthogonal multiple access technology and a system. The method is applicable to an eNB and includes: the eNB transmits first information and second information of UE to the UE by using same resources; and the eNB transmits indication information to the UE, the indication information indicating the UE that the first information of the UE is overlapped on resources for transmitting the second information of the UE. With the method, apparatus and system of the embodiments of this disclosure, a system capacity of a control channel area of the UE may be improved, thereby improving an overall capacity of the system.

## Description

### Field

This disclosure relates to the field of communication technologies, and in particular to an information transmission method and apparatus based on a non-orthogonal multiple access technology and a system.

### Background

According to the non-orthogonal multiple access (NOMA) technology, data of different user equipment (UE, also referred to as a user, a terminal, or terminal equipment) may be transmitted in the same resources by using different power levels. At a receiver end, the UE needs first to cancel interference from other UE by using a serial interference cancellation technology, and then demodulate data of itself. In order to achieve the non-orthogonal multiple access, the UE side needs to learn transmission power of user data overlapped on the same resources and modulation coding schemes adopted in transmitting each user data. If the non-orthogonal multiple access technology is used, the system capacity shall be relatively greatly improved.

It should be noted that the above description of the background is merely provided for clear and complete explanation of this disclosure and for easy understanding by those skilled in the art. And it should not be understood that the above technical solution is known to those skilled in the art as it is described in the background of this disclosure.

### Summary

Currently, overlapping of data of different UE in data channels of the UE (such as physical downlink shared channels, PDSCHs) is taken into account in the non-orthogonal multiple access technology, but overlapping of data channels (such as PDSCHs) and control channels (such as physical downlink control channels, PDCCHs)/enhanced PDCCHs (ePDCCHs) of the same UE and overlapping of data channels (such as PDSCHs) and control channels (such as PDCCHs/ePDCCHs) of different UE are not taken into account. Hence, in the related art, only a system capacity of a data channel area of UE may be improved. However, in a practical system, control channels of UE are usually transmitted by using a relatively robust modulation demodulation scheme (such as quadrature phase shift keying, QPSK), and for UE of relatively good channel conditions, if data of the UE or other UE are overlapped on the control channels, reception of the data in the control channels is not influenced on the one hand, and on the other hand, the system capacity of the control channel area of the UE may further be improved, thereby improving the overall capacity of the system.

In order to solve a problem of improving a system capacity of a control channel area of the UE, embodiments of this disclosure provide an information transmission method and apparatus based on a non-orthogonal multiple access technology and a system.

According to a first aspect of the embodiments of this disclosure, there is provided an information transmission method based on a non-orthogonal multiple access technology, applicable to an eNB, the method including: the eNB transmits first information and second information of UE to the UE by using same resources; and the eNB transmits indication information to the UE, the indication information indicating the UE that the first information of the UE is overlapped on resources for transmitting the second information of the UE.

According to a second aspect of the embodiments of this disclosure, there is provided an information transmission method based on a non-orthogonal multiple access technology, applicable to UE, the method including: the UE receives indication information transmitted by an eNB, the indication information indicating that first information of the UE is overlapped on resources for transmitting second information of the UE; and the UE demodulates the second information of the UE on the resources for transmitting the second information of the UE, and cancels interference incurred by the second information of the UE, so as to obtain the first information of the UE.

According to a third aspect of the embodiments of this disclosure, there is provided an information transmission method based on a non-orthogonal multiple access technology, applicable to an eNB, the method including: the eNB transmits first information or second information of UE to the UE, resources for transmitting the first information or the second information being the same as resources for transmitting third information; and the eNB transmits indication information and/or identification information to the UE, the indication information indicating the UE that the third information is overlapped on the resources for transmitting the first information or the second information of the UE, and the identification information being used for demodulating the third information.

According to a fourth aspect of the embodiments of this disclosure, there is provided an information transmission method based on a non-orthogonal multiple access technology, applicable to UE, the method including: the UE receives indication information and/or identification information transmitted by an eNB, the indication information indicating the UE that third information is overlapped on resources for transmitting first information or second information of the UE, and the identification information being used for demodulating the third information; and the UE demodulates the third information on the resources for transmitting the third information by using the identification information for demodulating the third information, and cancels interference incurred by the third information, so as to obtain the first information or the second information of the UE.

According to a fifth aspect of the embodiments of this disclosure, there is provided an information transmission apparatus based on a non-orthogonal multiple access technology, applicable to an eNB, the apparatus including: a first transmitting unit configured to transmit first information and second information of UE to the UE by using same resources; and a second transmitting unit configured to transmit indication information to the UE, the indication information indicating the UE that the first information of the UE is overlapped on resources for transmitting the second information of the UE.

According to a sixth aspect of the embodiments of this disclosure, there is provided an information transmission apparatus based on a non-orthogonal multiple access technology, applicable to UE, the apparatus including: a receiving unit configured to receive indication information transmitted by an eNB, the indication information indicating that first information of the UE is overlapped on resources for transmitting second information of the UE; and a processing unit configured to demodulate the second information of the UE on the resources for transmitting the second information of the UE, and cancel interference incurred by the second information of the UE, so as to obtain the first information of the UE.

According to a seventh aspect of the embodiments of this disclosure, there is provided an information transmission apparatus based on a non-orthogonal multiple access technology, applicable to an eNB, the apparatus including: a first transmitting unit configured to transmit first information or second information of UE to the UE, resources for transmitting the first information or the second information being the same as resources for transmitting third information; and a second transmitting unit configured to transmit indication information and/or identification information to the UE, the indication information indicating the UE that the third information is overlapped on the resources for transmitting the first information or the second information of the UE, and the identification information being used for demodulating the third information.

According to an eighth aspect of the embodiments of this disclosure, there is provided an information transmission apparatus based on a non-orthogonal multiple access technology, applicable to UE, the apparatus including: a receiving unit configured to receive indication information and/or identification information transmitted by an eNB, the indication information indicating the UE that third information is overlapped on resources for transmitting first information or second information of the UE, and the identification information being used for demodulating the third information; and a processing unit configured to demodulate the third information on the resources for transmitting the third information by using the identification information for demodulating the third information, and cancel interference incurred by the third information, so as to obtain the first information or the second information of the UE.

According to a ninth aspect of the embodiments of this disclosure, there is provided an eNB, including the information transmission apparatus based on a non-orthogonal multiple access technology as described in the fifth aspect or the seventh aspect.

According to a tenth aspect of the embodiments of this disclosure, there is provided UE, including the information transmission apparatus based on a non-orthogonal multiple access technology as described in the sixth aspect or the eighth aspect.

According to an eleventh aspect of the embodiments of this disclosure, there is provided a communication system, including the eNB as described in the ninth aspect and the UE as described in the tenth aspect.

An advantage of the embodiments of this disclosure exists in that by overlapping data of UE or other UE on control channels of the UE, a system capacity of a control channel area of the UE may be improved, thereby improving an overall capacity of the system.

With reference to the following description and drawings, the particular embodiments of this disclosure are disclosed in detail, and the principles of this disclosure and the manners of use are indicated. It should be understood that the scope of the embodiments of this disclosure is not limited thereto. The embodiments of this disclosure contain many alternations, modifications and equivalents within the spirits and scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprises/comprising/includes/including" when used in this specification is taken to specify the presence of stated features, integers, steps or components but does not preclude the presence or addition of one or more other features, integers, steps, components or groups thereof.

### Brief Description of the Drawings

The drawings are included to provide further understanding of the present disclosure, which constitute a part of the specification and illustrate the exemplary embodiments of the present disclosure, and are used for setting forth the principles of the present disclosure together with the description. It is clear and understood that the accompanying drawings in the following description are some embodiments of this disclosure, and for those of ordinary skills in the art, other accompanying drawings may be obtained according to these accompanying drawings without making an inventive effort. In the drawings:
FIG. 1 is a schematic diagram of resource positions of a legacy physical control channel and physical data channel;
FIG. 2 is a flowchart of an information transmission method of Embodiment 1 of this disclosure;
FIG. 3 is a schematic diagram of an implementation of a resource overlapping manner of Embodiment 1;
FIG. 4 is a flowchart of an information transmission method of Embodiment 2 of this disclosure;
FIG. 5 is a flowchart of an information transmission method of Embodiment 3 of this disclosure;
FIG. 6 is a flowchart of an implementation of a resource overlapping manner of Embodiment 3;
FIG. 7 is a flowchart of another implementation of the resource overlapping manner of Embodiment 3;
FIG. 8 is a flowchart of an information transmission method of Embodiment 4 of this disclosure;
FIG. 9 is a schematic diagram of a structure of an information transmission apparatus of Embodiment 5 of this disclosure;
FIG. 10 is a schematic diagram of a structure of an information transmission apparatus of Embodiment 6 of this disclosure;
FIG. 11 is a schematic diagram of a structure of an information transmission apparatus of Embodiment 7 of this disclosure;
FIG. 12 is a schematic diagram of a structure of an information transmission apparatus of Embodiment 8 of this disclosure;
FIG. 13 is a schematic diagram of a structure of an eNB of Embodiment 9 of this disclosure;
FIG. 14 is a schematic diagram of a structure of UE of Embodiment 10 of this disclosure; and
FIG. 15 is a schematic diagram of a topology of a communication system of Embodiment 11 of this disclosure.

### Detailed Description

These and further aspects and features of the present disclosure will be apparent with reference to the following description and attached drawings. In the description and drawings, particular embodiments of the disclosure have been disclosed in detail as being indicative of some of the ways in which the principles of the disclosure may be employed, but it is understood that the disclosure is not limited correspondingly in scope. Rather, the disclosure includes all changes, modifications and equivalents coming within the terms of the appended claims. Various embodiments of this disclosure shall be described below with reference to the accompanying drawings. These embodiments are illustrative only, and are not intended to limit this disclosure.

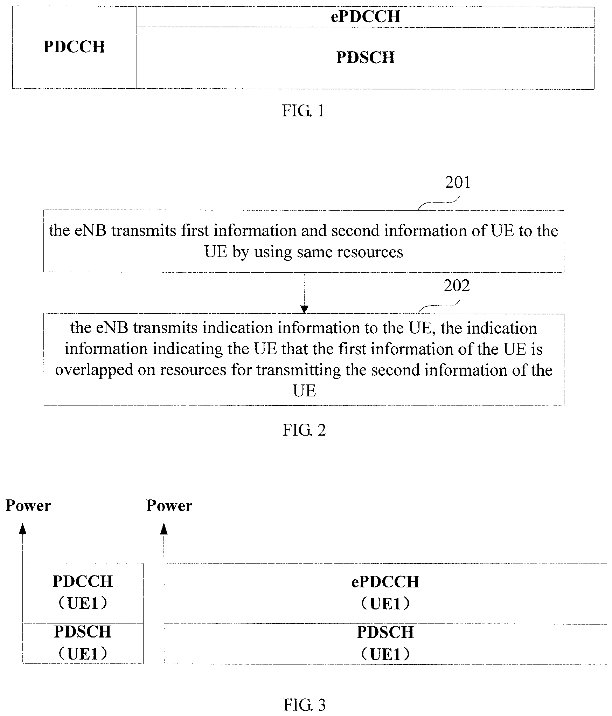

In the embodiments of this disclosure, resources may be time domain resources, frequency domain resources, spatial domain resources, code domain resources, or resources obtained after multiple domains are combined, such as time frequency domain resources. FIG. 1 is a schematic diagram of resource positions of a legacy physical control channel and physical data channel. As shown in FIG. 1, the legacy physical control channel (such as a PDCCH/ePDCCH) and physical data channel (such as a PDSCH) are located in different resource positions.

The method, apparatus and system of the embodiments of this disclosure shall be described below with reference to the accompanying drawings.

### Embodiment 1

The embodiment of this disclosure provides an information transmission method based on a non-orthogonal multiple access technology, applicable to an eNB. FIG. 2 is a flowchart of the method. Referring to FIG. 2, the method includes:
step 201: the eNB transmits first information and second information of UE to the UE by using same resources; and
step 202: the eNB transmits indication information to the UE, the indication information indicating the UE that the first information of the UE is overlapped on resources for transmitting the second information of the UE.

In this embodiment, the first information and the second information of the UE may be data in a PDCCH/ePDCCH of the UE and data in a PDSCH of the UE, respectively; for example, the first information of the UE is data in the PDCCH/ePDCCH of the UE, and the second information of the UE is data in the PDSCH of the UE; and for another example, the first information of the UE is data in the PDSCH of the UE, and the second information of the UE is data in the PDCCH/ePDCCH of the UE.

For the sake of convenience of explanation, following description shall be given taking that the first information of the UE corresponds to the PDSCH of the UE and the second information of the UE corresponds to the PDCCH/ePDCCH of the UE as an example.

In this embodiment, the eNB transmits the PDCCH/ePDCCH and the PDSCH of the UE in the same resources at different power levels by using the non-orthogonal multiple access technology.

FIG. 3 is schematic diagram of an implementation of overlapping of a PDCCH/ePDCCH and a PDSCH of UE1. As shown in FIG. 3, the PDCCH/ePDCCH and the PDSCH of UE1 are located in the same resources, and power allocated for the PDCCH/ePDCCH is PI, and power allocated for the PDSCH is P2. In this embodiment, in order to assist UE1 in demodulating data carried by the PDCCH/ePDCCH and the PDSCH, the eNB transmits the above indication information to UE1, informing UE1 via the indication information that the PDSCH of UE1 is overlapped on the PDCCH/ePDCCH of UE1. Hence, after receiving the indication information, UE1 may first demodulate the data carried in its PDCCH/ePDCCH, then on the same resources, cancel interference incurred by its PDCCH/ePDCCH, and finally demodulate the data of the UE1 carried in the PDSCH overlapped on the resources. In this embodiment, UE1 may use a serial interference cancellation technology to cancel the interference incurred by its PDCCH/ePDCCH, and may also use other technologies to cancel the interference incurred by its PDCCH/ePDCCH.

In this embodiment, in addition to transmitting the above indication information to the UE, the eNB may further notify the UE of power allocation and respective modulation demodulation schemes of the PDCCH/ePDCCH and the PDSCH, so that the UE demodulates the PDCCH/ePDCCH and the PDSCH. A particular manner of notification is not limited herein, and the non-orthogonal multiple access technology may be referred to.

In this embodiment, as described above, the resources may be time domain resources, frequency domain resources, spatial domain resources, and/or code domain resources. In this embodiment, "the same resources" refer to resources that may be used to transmit the above first information or the second information, and are completely the same, no matter which domain they are belong to. For example, if resources that may be used to transmit the above first information or the second information are time domain resources, frequency domain resources and code domain resources, resources only being the same in one or two domains is not sufficient, and resources that are the same in the above three domains can only be referred to as the same resources.

In an implementation of this embodiment, the above indication information may be transmitted via the second information. For example, the above indication information may be transmitted in the PDCCH/ePDCCH transmitted to the UE; wherein, the PDSCH of the UE is overlapped on the PDCCH/ePDCCH.

In another implementation of this embodiment, the above indication information may be transmitted via preconfigured information. That is, the above indication information is preconfigured, and after the UE receives the preconfigured information, if the UE receives PDCCH/ePDCCH transmitted by the eNB to the UE, the UE first demodulates the data carried in the PDCCH/ePDCCH of itself, then at the same resource position, cancels the interference incurred by the PDCCH/ePDCCH by using the interference cancellation technology, and finally demodulates the data carried in the PDSCH of itself.

In this embodiment, the preconfigured information may further include a duration of overlapping the first information of the UE on the resources for transmitting the second information of the UE. That is, the preconfigured information may further designate a duration of overlapping of the PDCCH/ePDCCH and the PDSCH, such as a certain number of subframes; namely, such a data overlapping manner is used within the certain number of subframes to transmit data. Hence, by defining a duration of a data overlapping manner, information transmission manners may be selected flexibly.

In the method of this embodiment, by overlapping the data of the UE on the control channels of the UE, a system capacity of a control channel area of the UE may be improved, thereby improving an overall capacity of the system.

### Embodiment 2

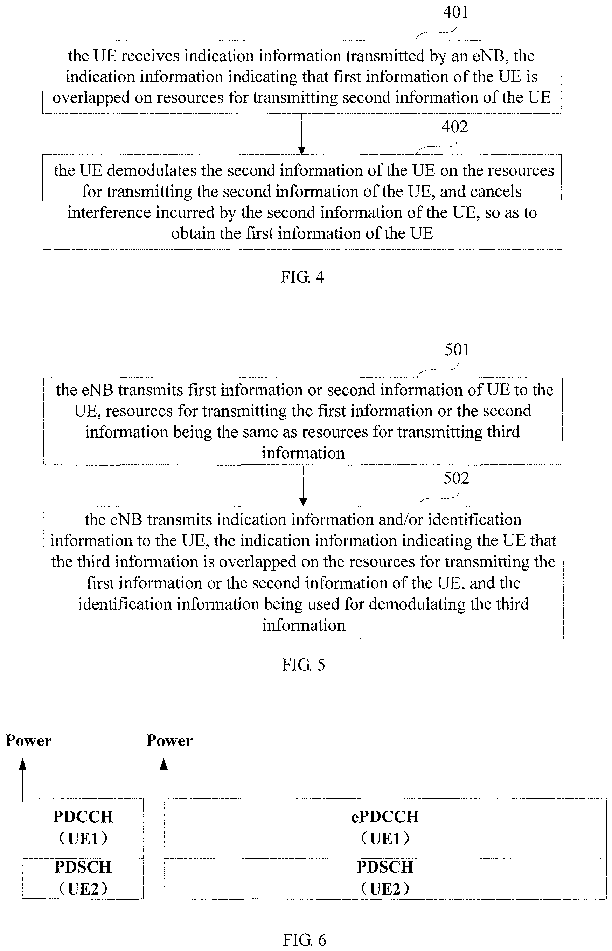

The embodiment of this disclosure provides an information transmission method based on a non-orthogonal multiple access technology, applicable to UE. This method is processing at a UE side corresponding to the method of Embodiment 1, with contents identical to those in Embodiment 1 being not going to be described herein any further. FIG. 4 is a flowchart of the method. Referring to FIG. 4, the method includes:
step 401: the UE receives indication information transmitted by an eNB, the indication information indicating that first information of the UE is overlapped on resources for transmitting second information of the UE; and
step 402: the UE demodulates the second information of the UE on the resources for transmitting the second information of the UE, and cancels interference incurred by the second information of the UE, so as to obtain the first information of the UE.

In this embodiment, contents and transmission manners of the first information, the second information and the indication information are identical to those in Embodiment 1, the contents of which being incorporated herein, and being not going to be described herein any further.

In this embodiment, after receiving the above indication information, the UE may learn that the first information of the UE is overlapped on the resources for transmitting the second information of the UE. Hence, in order to obtain the first information and the second information, the UE may first demodulate the second information on the resources for transmitting the second information to obtain the second information, then cancel interference incurred by the second information, and finally demodulate the first information on the resources for transmitting the second information to obtain the first information.

In this embodiment, as described in Embodiment 1, the UE may use the interference cancellation technology to cancel the interference incurred by the second information, and may also use other technologies to cancel the interference incurred by the second information.

In this embodiment, as described in Embodiment 1, information needed in demodulating the first information and the second information, such as a power allocation scheme and respective modulation and demodulation schemes of the first information and the second information, may also be transmitted by the eNB by using a legacy non-orthogonal multiple access technology, which shall not be described herein any further.

In the method of this embodiment, by overlapping the data of the UE on the control channels of the UE, a system capacity of a control channel area of the UE may be improved, thereby improving an overall capacity of the system.

### Embodiment 3

The embodiment of this disclosure provides an information transmission method based on a non-orthogonal multiple access technology, applicable to an eNB. FIG. 5 is a flowchart of the method. Referring to FIG. 5, the method includes:
step 501: the eNB transmits first information or second information of UE to the UE, resources for transmitting the first information or the second information being the same as resources for transmitting third information; and
step 502: the eNB transmits indication information and/or identification information to the UE, the indication information indicating the UE that the third information is overlapped on the resources for transmitting the first information or the second information of the UE, and the identification information being used for demodulating the third information.

In this embodiment, meanings of the first information and the second information are the same as those of Embodiment 1. For example, the first information may be data in a PDSCH of the UE, and the second information may be data in a PDCCH/ePDCCH of the UE. Or, conversely, the first information may be data in a PDCCH/ePDCCH of the UE, and the second information may be data in a PDSCH of the UE.

In this embodiment, the third information refers to other information different from the first information and the second information of the UE, such as data in a PDCCH/ePDCCH scrambled by a C-RNTI, or an SI-RNTI, or an SPS-RNTI, or an RA-RNTI, or a P-RNTI, of other UE.

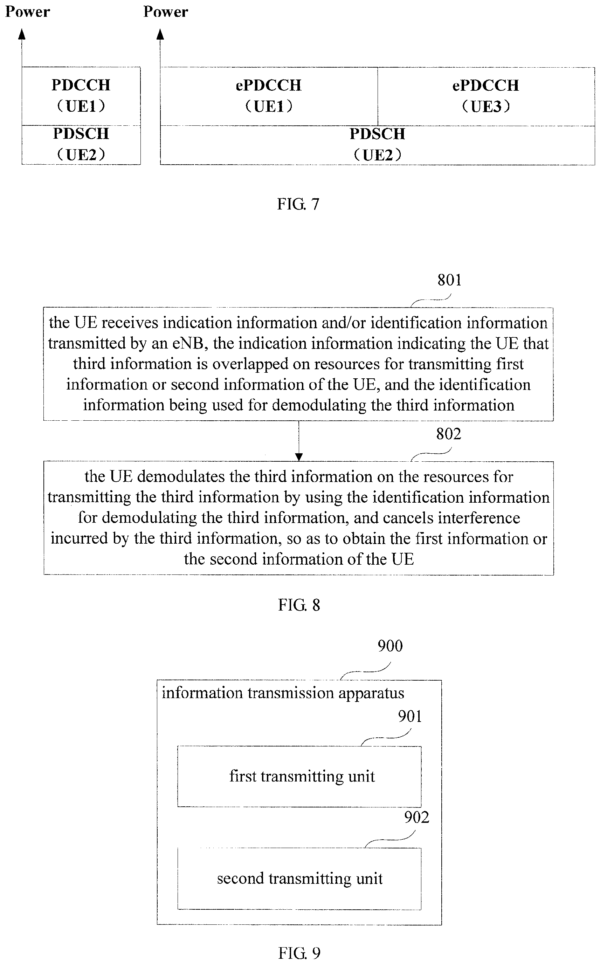

In this embodiment, different from that the eNB transmits the PDSCH and PDCCH/ePDCCH of the same UE by using the same resources in Embodiment 1, the eNB transmits the PDSCH and PDCCH/ePDCCH of different UEs by using the same resources in this embodiment. For example, the eNB overlaps a PDSCH of UE2 and a PDCCH/ePDCCH of UE1 on the same resources for transmission; as shown in FIG. 6, in this example, UE2 is the UE, and UE1 is the other UE. And for another example, the eNB overlaps a PDSCH of UE2, a PDCCH/ePDCCH of UE1 and an ePDCCH of UE3 on the same resources for transmission; as shown in FIG. 7, in this example, UE2 is the UE, and UE1 and UE3 are the other UEs.

In this embodiment, similar to Embodiment 1, the "resources" here include time domain resources, frequency domain resources, spatial domain resources, and/or code domain resources. And "being the same" here refers to that available resources are the same, whichever domain they are belong to.

In this embodiment, the eNB overlaps a PDSCH or a PDCCH/ePDCCH of a UE and a PDCCH/ePDCCH of other UE (one or more) on the same resources for transmission, thereby fully utilizing channel resources of the UE, and improving the overall capacity of the system.

In this embodiment, in order to ensure that the UE correctly demodulates its data, the eNB further transmits indication information and/or identification information to the UE. The indication information here is used to indicate the UE that the third information is overlapped on the resources for transmitting the first information or the second information of the UE, and the identification information here is used for demodulating the fourth information.

In an implementation, the eNB transmits only the indication information to the UE, in which case the UE needs further to acquire the identification information for demodulating the third information, so as to use the identification information to demodulate the third information.

In another implementation, the eNB transmits only the identification information to the UE, and the identification information impliedly indicates that the third information is overlapped on the resources for transmitting the first information or the second information of the UE, in which case the UE may directly use the received identification information to demodulate the above third information.

In a further implementation, the eNB transmits the indication information and the identification information to the UE, and the UE determines according to the indication information that the third information is overlapped on the resources for transmitting the first information or the second information of the UE, and uses the identification information to demodulate the above third information.

In this embodiment, the above identification information may be any one of the following or a combination thereof, however, this embodiment is not limited thereto:
a Cell-Radio Network Temporary Identifier (C-RNTI);
a Semi-persistent Scheduling-Radio Network Temporary Identifier (SPS-RNTI);
a System Information-Radio Network Temporary Identifier (SI-RNTI);
a Paging-Radio Network Temporary Identifier (P-RNTI); and
a Random Access-Radio Network Temporary Identifier (RA-RNTI).

The method of this embodiment shall be described below with reference to FIG. 6.

As shown in FIG. 6, the eNB overlaps the PDCCH/ePDCCH of UE1 and the PDSCH of UE2 on the same resources for transmission. In this example, power allocated for the PDCCH/ePDCCH of UE1 is PI, and power allocated for the PDSCH of UE2 is P2. In order to assist UE2 in demodulating the data carried by its PDSCH, in addition to notifying UE2 of the power of the PDCCH/ePDCCH of UE1 and power of the PDSCH of UE2 and modulation and demodulation schemes of the PDCCH/ePDCCH of UE1 and the PDSCH of UE2, the eNB further transmits information on UE identification needed in demodulating the PDCCH/ePDCCH of UE1, such as a C-RNTI, an SPS-RNTI, an SI-RNTI, a P-RNTI, or an RA-RNTI, etc., of UE1, to UE2. After receiving the above information, UE2 may first demodulate the data carried in the PDCCH/ePDCCH of UE1, then cancel the data carried in the PDCCH/ePDCCH of UE1, and finally demodulate the data carried in the PDSCH of itself. Likewise, the UE may cancel interference incurred by the PDCCH/ePDCCH of UE1 by using the serial interference cancellation technology, and other technologies may also be used.

In this example, similar to Embodiment 1, the eNB may adopt a legacy non-orthogonal multiple access technology to transmit the power of the PDCCH/ePDCCH of UE1 and power of the PDSCH of UE2 and modulation and demodulation schemes of the PDCCH/ePDCCH of UE1 and the PDSCH of UE2 to UE2.

Furthermore, in FIG. 6, the PDCCH/ePDCCH overlapped with the PDSCH of UE2 being related to one UE (i.e. UE1) is taken as an example. However, this embodiment is not limited thereto, and as described above, it may also be related to multiple UEs (such as UE1 and UE3).

In an implementation of this embodiment, the above indication information and/or identification information may be transmitted in a subframe where the overlapping of the above first information or second information of the UE with the third information occurs; for example, the above indication information and/or identification information may be transmitted in a subframe where overlapping of the PDCCH/ePDCCH of UE1 and the PDSCH of UE2 occurs.

In another implementation of this embodiment, the above indication information and/or the above identification information may also be transmitted via preconfigured information. That is, the above indication information and/or the above identification information are/is preconfigured, and after the UE receives the preconfigured information, the UE may demodulate the third information (the PDCCH/ePDCCH) on each subframe, and then demodulate the data carried in the first information or the second information (such as the PDSCH) of itself after cancelling the interference incurred by the third information (the PDCCH/ePDCCH).

In this implementation, the preconfigured information may further include a duration of overlapping the above third information on the resources for transmitting the above first information or the above second information of the UE. That is, the preconfigured information may further designate a duration of overlapping of the PDCCH/ePDCCH (the third information) and the PDSCH (the above first information or the above second information), such as a certain number of subframes; namely, such a data overlapping manner is used within the certain number of subframes to transmit data. Hence, by defining a duration of a data overlapping manner, information transmission manners may be selected flexibly.

In the method of this embodiment, by overlapping the data in the control channels of other UE on the control channels or the data channels of the UE, a system capacity of a control channel area or a data channel area of the UE may be improved, thereby improving an overall capacity of the system.

### Embodiment 4

The embodiment of this disclosure provides an information transmission method based on a non-orthogonal multiple access technology, applicable to UE. This method is processing at a UE side corresponding to the method of Embodiment 3, with contents identical to those in Embodiment 3 being not going to be described herein any further. FIG. 8 is a flowchart of the method. Referring to FIG. 8, the method includes:
step 801: the UE receives indication information and/or identification information transmitted by an eNB, the indication information indicating the UE that third information is overlapped on resources for transmitting first information or second information of the UE, and the identification information being used for demodulating the third information; and
step 802: the UE demodulates the third information on the resources for transmitting the third information by using the identification information for demodulating the third information, and cancels interference incurred by the third information, so as to obtain the first information or the second information of the UE.

In this embodiment, contents and transmission manners of the first information, the second information, the third information, the indication information and the identification information are identical to those in Embodiment 3, the contents of which being incorporated herein, and being not going to be described herein any further.

In this embodiment, if the UE receives only the above indication information, the UE needs further to acquire the above identification information, so as to demodulate the third information. How to acquire the above identification information is not limited in this embodiment. In this embodiment, after acquiring the above identification information, the UE may use the identification information and transmission power and modulation and demodulation schemes of the third information transmitted by the eNB to demodulate the third information, then cancel interference incurred by the third information, and finally use transmission power and modulation and demodulation schemes of the first information or the second information transmitted by the eNB to demodulate the first information or the second information of itself.

In this embodiment, if the UE receives only the above identification information, and as the identification information impliedly indicates that the third information is overlapped on the resources for transmitting the first information or the second information of the UE, the UE may directly use the identification information and the transmission power and modulation and demodulation schemes of the third information transmitted by the eNB to demodulate the third information, then cancel the interference incurred by the third information, and finally use the transmission power and modulation and demodulation schemes of the first information or the second information transmitted by the eNB to demodulate the first information or the second information of itself.

In this embodiment, if the UE receives the above indication information and identification information, the UE may directly use the identification information and the transmission power and modulation and demodulation schemes of the third information transmitted by the eNB to demodulate the third information, then cancel the interference incurred by the third information, and finally use the transmission power and modulation and demodulation schemes of the first information or the second information transmitted by the eNB to demodulate the first information or the second information of itself.

In the method of this embodiment, by overlapping the data in the control channels of other UE on the control channels or the data channels of the UE, a system capacity of a control channel area of the UE may be improved, thereby improving an overall capacity of the system.

### Embodiment 5

The embodiment of this disclosure further provides an information transmission apparatus based on a non-orthogonal multiple access technology, applicable to an eNB. As principles of the apparatus for solving problems are similar to that of the method of Embodiment 1, the implementation of the method of Embodiment 1 may be referred to for implementation of the apparatus, with identical contents being not going to be described herein any further.

FIG. 9 is a schematic diagram of a structure of the apparatus. Referring to FIG. 9, the apparatus 900 includes a first transmitting unit 901 and a second transmitting unit 902. In this embodiment, the first transmitting unit 901 is configured to transmit first information and second information of UE to the UE by using same resources, and the second transmitting unit 902 is configured to transmit indication information to the UE, the indication information indicating the UE that the first information of the UE is overlapped on resources for transmitting the second information of the UE.

In this embodiment, the first information is data in a control channel of the UE, and the second information is data in a data channel of the UE; or, the first information is data in a data channel of the UE, and the second information is data in a control channel of the UE.

In this embodiment, the resources may be time domain resources, frequency domain resources, spatial domain resources, and/or code domain resources.

In this embodiment, the second transmitting unit 902 may transmit the indication information via the above second information or preconfigured information.

In this embodiment, the preconfigured information may include a duration of overlapping the first information of the UE on the resources for transmitting the second information of the UE.

With the apparatus of this embodiment, by overlapping the data of the UE on the control channels of the UE, a system capacity of a control channel area of the UE may be improved, thereby improving an overall capacity of the system.

### Embodiment 6

The embodiment of this disclosure further provides an information transmission apparatus based on a non-orthogonal multiple access technology, applicable to UE. As principles of the apparatus for solving problems are similar to that of the method of Embodiment 2, the implementation of the method of Embodiment 2 may be referred to for implementation of the apparatus, with identical contents being not going to be described herein any further.

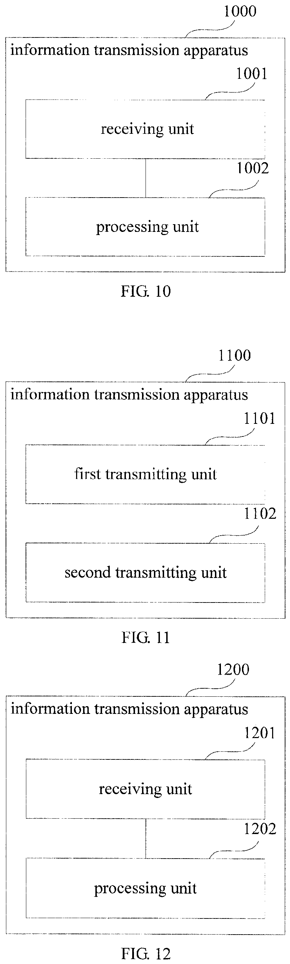

FIG. 10 is a schematic diagram of a structure of the apparatus. Referring to FIG. 10, the apparatus 1000 includes a receiving unit 1001 and a processing unit 1002. In this embodiment, the receiving unit 1001 is configured to receive indication information transmitted by an eNB, the indication information indicating that first information of the UE is overlapped on resources for transmitting second information of the UE, and the processing unit 1002 is configured to demodulate the second information of the UE on the resources for transmitting the second information of the UE, and cancel interference incurred by the second information of the UE, so as to obtain the first information of the UE.

In this embodiment, contents and transmission manners of the first information, the second information and the indication information are identical to those in Embodiment 1, which shall not be described herein any further.

With the apparatus of this embodiment, by overlapping the data of the UE on the control channels of the UE, a system capacity of a control channel area of the UE may be improved, thereby improving an overall capacity of the system.

### Embodiment 7

The embodiment of this disclosure further provides an information transmission apparatus based on a non-orthogonal multiple access technology, applicable to an eNB. As principles of the apparatus for solving problems are similar to that of the method of Embodiment 3, the implementation of the method of Embodiment 3 may be referred to for implementation of the apparatus, with identical contents being not going to be described herein any further.

FIG. 11 is a schematic diagram of a structure of the apparatus. Referring to FIG. 11, the apparatus 1100 includes a first transmitting unit 1101 and a second transmitting unit 1102. In this embodiment, the first transmitting unit 1101 is configured to transmit first information or second information of UE to the UE, resources for transmitting the first information or the second information being the same as resources for transmitting third information, and the second transmitting unit 1102 is configured to transmit indication information and/or identification information to the UE, the indication information indicating the UE that the third information is overlapped on the resources for transmitting the first information or the second information of the UE, and the identification information being used for demodulating the third information.

In this embodiment, contents and transmission manners of the first information, the second information, the third information, the indication information and the identification information are identical to those in Embodiment 3, which shall not be described herein any further.

In this embodiment, the third information may be control information of one or more other UEs.

In this embodiment, the second transmitting unit 1102 may transmit the indication information and/or the identification information in a subframe where the overlapping of the first information or the second information of the UE with the third information occurs, or transmit the indication information and/or the identification information via preconfigured information.

In this embodiment, the preconfigured information may include a duration of overlapping the third information on the resources for transmitting the first information or the second information of the UE.

With the apparatus of this embodiment, by overlapping the data in the control channels of other UE on the control channels or the data channels of the UE, a system capacity of a control channel area of the UE may be improved, thereby improving an overall capacity of the system.

### Embodiment 8

The embodiment of this disclosure further provides an information transmission apparatus based on a non-orthogonal multiple access technology, applicable to UE. As principles of the apparatus for solving problems are similar to that of the method of Embodiment 4, the implementation of the method of Embodiment 4 may be referred to for implementation of the apparatus, with identical contents being not going to be described herein any further.

FIG. 12 is a schematic diagram of a structure of the apparatus. Referring to FIG. 12, the apparatus 1200 includes a receiving unit 1201 and a processing unit 1202. In this embodiment, the receiving unit 1201 is configured to receive indication information and/or identification information transmitted by an eNB, the indication information indicating the UE that third information is overlapped on resources for transmitting first information or second information of the UE, and the identification information being used for demodulating the third information, and the processing unit 1202 is configured to demodulate the third information on the resources for transmitting the third information by using the identification information for demodulating the third information, and cancel interference incurred by the third information, so as to obtain the first information or the second information of the UE.

In this embodiment, contents and transmission manners of the first information, the second information, the third information, the indication information and the identification information are identical to those in Embodiment 3, which shall not be described herein any further.

In this embodiment, when the receiving unit 1201 receives only the indication information transmitted by the eNB, the processing unit 1202 acquires the identification information for demodulating the third information, and demodulates the third information on the resources for transmitting the third information by using the acquired identification information.

In this embodiment, when the receiving unit 1201 receives only the identification information transmitted by the eNB, the processing unit 1202 determines that the third information is overlapped on the resources for transmitting the first information or the second information of the UE, and demodulates the third information on the resources for transmitting the third information by using the received identification information.

In this embodiment, when the receiving unit 1201 receives the indication information and the identification information transmitted by the eNB, the processing unit 1202 determines that the third information is overlapped on the resources for transmitting the first information or the second information of the UE, and demodulates the third information on the resources for transmitting the third information by using the received identification information.

With the apparatus of this embodiment, by overlapping the data in the control channels of other UE on the control channels or the data channels of the UE, a system capacity of a control channel area of the UE may be improved, thereby improving an overall capacity of the system.

### Embodiment 9

The embodiment of this disclosure provides an eNB, including the information transmission apparatus based on a non-orthogonal multiple access technology as described in Embodiment 5 or Embodiment 7.

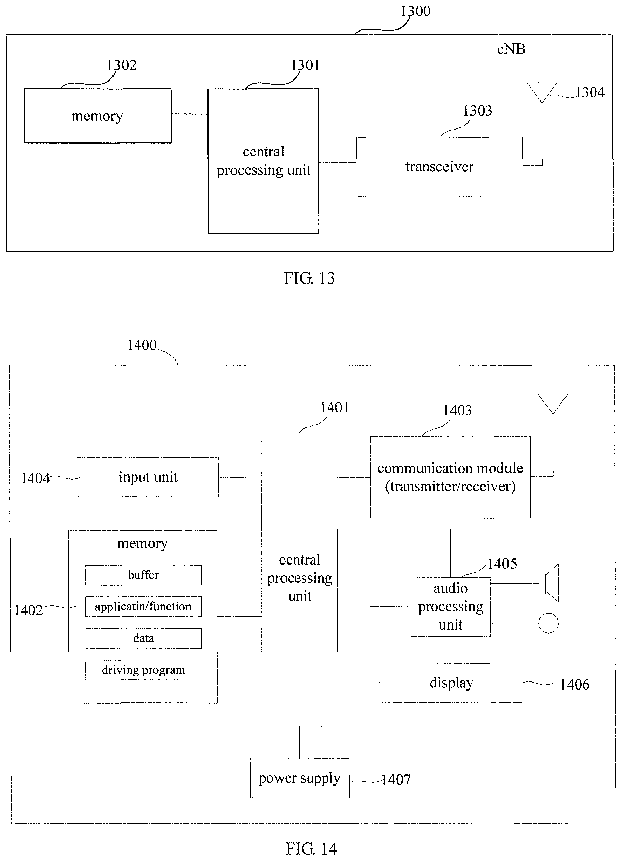

FIG. 13 is a schematic diagram of a structure of the eNB of the embodiment of this disclosure. As shown in FIG. 13, the eNB 1300 may include a central processing unit (CPU) 1301 and a memory 1302, the memory 1302 being coupled to the central processing unit 1301. In this embodiment, the memory 1302 may store various data, and furthermore, it may store a program for information processing, and execute the program under control of the central processing unit 1301, so as to receive various information transmitted by UE, and transmit various information to the UE.

In an implementation, the functions of the information transmission apparatus based on a non-orthogonal multiple access technology may be integrated into the central processing unit 1301.

In another implementation, the information transmission apparatus based on a non-orthogonal multiple access technology and the central processing unit 1301 may be configured separately. For example, the information transmission apparatus based on a non-orthogonal multiple access technology may be configured as a chip connected to the central processing unit 1301, with its functions being realized under control of the central processing unit 1301.

Furthermore, as shown in FIG. 13, the eNB 1300 may further include a transceiver 1303, and an antenna 1304, etc. In this embodiment, functions of the above components are similar to those in the related art, and shall not be described herein any further. It should be noted that the eNB 1300 does not necessarily include all the parts shown in FIG. 13, and furthermore, the eNB 1300 may include parts not shown in FIG. 13, and the related art may be referred to.

With the eNB of this embodiment, by overlapping the data of the UE or other UE on the control channels of the UE, a system capacity of a control channel area of the UE may be improved, thereby improving an overall capacity of the system.

### Embodiment 10

The embodiment of this disclosure provides UE, including the information transmission apparatus based on a non-orthogonal multiple access technology as described in Embodiment 6 or Embodiment 8.

FIG. 14 is a schematic diagram of a structure of the UE 1400 of the embodiment of this disclosure. As shown in FIG. 14, the UE 1400 may include a central processing unit 1401 and a memory 1402, the memory 1402 being coupled to the central processing unit 1401. It should be noted that this figure is illustrative only, and other types of structures may also be used, so as to supplement or replace this structure and achieve a telecommunications function or other functions.

In an implementation, the functions of the information transmission apparatus based on a non-orthogonal multiple access technology may be integrated into the central processing unit 1401.

In another implementation, the information transmission apparatus based on a non-orthogonal multiple access technology and the central processing unit 1401 may be configured separately. For example, the information transmission apparatus based on a non-orthogonal multiple access technology may be configured as a chip connected to the central processing unit 1401, with its functions being realized under control of the central processing unit 1401.

As shown in FIG. 14, the UE 1400 may further include a communication module 1403, an input unit 1404, an audio processing unit 1405, a display 1406 and a power supply 1407. It should be noted that the UE 140 does not necessarily include all the parts shown in FIG. 14, and furthermore, the UE 1400 may include parts not shown in FIG. 14, and the related art may be referred to.

As shown in FIG. 14, the central processing unit 1401 is sometimes referred to as a controller or control, and may include a microprocessor or other processor devices and/or logic devices. The central processing unit 1401 receives input and controls operations of every component of the UE 1400.

In this embodiment, the memory 1402 may be, for example, one or more of a buffer memory, a flash memory, a hard drive, a mobile medium, a volatile memory, a nonvolatile memory, or other suitable devices, which may store the above information related to the first information, the second information, the indication information and the identification information, and may further store a program executing related information. And the central processing unit 1401 may execute the program stored in the memory 1402, so as to realize information storage or processing, etc. Functions of other parts are similar to those of the related art, which shall not be described herein any further. The parts of the UE 1400 may be realized by specific hardware, firmware, software, or any combination thereof, without departing from the scope of the present disclosure.

With the UE of this embodiment, by overlapping the data of the UE or other UE on the control channels of the UE, a system capacity of a control channel area of the UE may be improved, thereby improving an overall capacity of the system.

### Embodiment 11

The embodiment of this disclosure provides a communication system, including the eNB as described in Embodiment 9 and the UE as described in Embodiment 10.

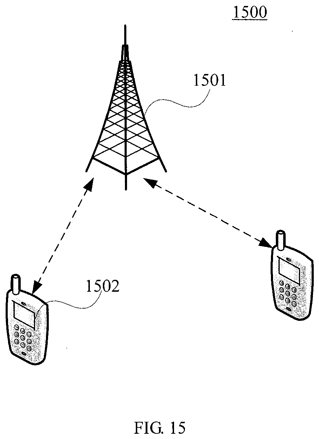

FIG. 15 is a schematic diagram of a structure of the communication system of the embodiment of this disclosure. As shown in FIG. 15, the communication system 1500 includes an eNB 1501 and UE 1502; wherein, the eNB 1501 may be the eNB 1300 described in Embodiment 9, and the UE 1502 may be the UE 1500 described in Embodiment 10. As the eNB and the UE have been described in detail in the above embodiments, the contents of them are incorporated herein, and shall not be described herein any further.

With the communication system of this embodiment, by overlapping the data of the UE or other UE on the control channels of the UE, a system capacity of a control channel area of the UE may be improved, thereby improving an overall capacity of the system.

An embodiment of the present disclosure provides a computer readable program code, which, when executed in an information processing apparatus or UE, will cause a computer unit to carry out the information transmission method based on a non-orthogonal multiple access technology described in Embodiment 2 or 4 in the information processing apparatus or the UE.

An embodiment of the present disclosure provides a computer readable medium, including a computer readable program code, which will cause a computer unit to carry out the information transmission method based on a non-orthogonal multiple access technology described in Embodiment 2 or 4 in an information processing apparatus or UE.

An embodiment of the present disclosure provides a computer readable program code, which, when executed in an information processing apparatus or an eNB, will cause a computer unit to carry out the information transmission method based on a non-orthogonal multiple access technology described in Embodiment 1 or 3 in the information processing apparatus or the eNB.

An embodiment of the present disclosure provides a computer readable medium, including a computer readable program code, which will cause a computer unit to carry out the information transmission method based on a non-orthogonal multiple access technology described in Embodiment 1 or 3 in an information processing apparatus or an eNB.

The above apparatuses and methods of the present disclosure may be implemented by hardware, or by hardware in combination with software. The present disclosure relates to such a computer-readable program that when the program is executed by a logic device, the logic device is enabled to carry out the apparatus or components as described above, or to carry out the methods or steps as described above. The present disclosure also relates to a storage medium for storing the above program, such as a hard disk, a floppy disk, a CD, a DVD, and a flash memory, etc.

The present disclosure is described above with reference to particular embodiments. However, it should be understood by those skilled in the art that such a description is illustrative only, and not intended to limit the protection scope of the present disclosure. Various variants and modifications may be made by those skilled in the art according to the spirits and principle of the present disclosure, and such variants and modifications fall within the scope of the present disclosure.

## Claims

1. An information transmission apparatus based on a non-orthogonal multiple access technology, applicable to an eNB, the apparatus comprising:
a first transmitting unit configured to transmit first information and second information of UE to the UE by using same resources; and
a second transmitting unit configured to transmit indication information to the UE, the indication information indicating the UE that the first information of the UE is overlapped on resources for transmitting the second information of the UE.

2. The apparatus according to claim 1, wherein the resources are time domain resources, frequency domain resources, spatial domain resources, and/or code domain resources.

3. The apparatus according to claim 1, wherein the second transmitting unit transmits the indication information via the second information or preconfigured information.

4. The apparatus according to claim 3, wherein the preconfigured information comprises a duration of overlapping the first information of the UE on the resources for transmitting the second information of the UE.

5. An information transmission apparatus based on a non-orthogonal multiple access technology, applicable to UE, the apparatus comprising:
a receiving unit configured to receive indication information transmitted by an eNB, the indication information indicating that first information of the UE is overlapped on resources for transmitting second information of the UE; and
a processing unit configured to demodulate the second information of the UE on the resources for transmitting the second information of the UE, and cancel interference incurred by the second information of the UE, so as to obtain the first information of the UE.

6. An information transmission apparatus based on a non-orthogonal multiple access technology, applicable to an eNB, the apparatus comprising:
a first transmitting unit configured to transmit first information or second information of UE to the UE, resources for transmitting the first information or the second information being the same as resources for transmitting third information; and
a second transmitting unit configured to transmit indication information and/or identification information to the UE, the indication information indicating the UE that the third information is overlapped on the resources for transmitting the first information or the second information of the UE, and the identification information being used for demodulating the third information.

7. The apparatus according to claim 6, wherein the identification information is any one of the following:
a Cell-Radio Network Temporary Identifier (C-RNTI);
a Semi-persistent Scheduling-Radio Network Temporary Identifier (SPS-RNTI);
a System Information-Radio Network Temporary Identifier (SI-RNTI);
a Paging-Radio Network Temporary Identifier (P-RNTI); and
a Random Access-Radio Network Temporary Identifier (RA-RNTI).

8. The apparatus according to claim 6, wherein the third information is control information of one or more other UEs.

9. The apparatus according to claim 6, wherein the second transmitting unit transmits the indication information and/or the identification information in a subframe where the overlapping of the first information or the second information of the UE with the third information occurs, or transmits the indication information and/or the identification information via preconfigured information.

10. The apparatus according to claim 9, wherein the preconfigured information comprises a duration of overlapping the third information on the resources for transmitting the first information or the second information of the UE.

11. The apparatus according to claim 6, wherein the resources are time domain resources, frequency domain resources, spatial domain resources, and/or code domain resources.

12. An information transmission apparatus based on a non-orthogonal multiple access technology, applicable to UE, the apparatus comprising:
a receiving unit configured to receive indication information and/or identification information transmitted by an eNB, the indication information indicating the UE that third information is overlapped on resources for transmitting first information or second information of the UE, and the identification information being used for demodulating the third information; and
a processing unit configured to demodulate the third information on the resources for transmitting the third information by using the identification information for demodulating the third information, and cancel interference incurred by the third information, so as to obtain the first information or the second information of the UE.

13. The apparatus according to claim 12, wherein,
when the receiving unit receives only the indication information transmitted by the eNB, the processing unit acquires the identification information for demodulating the third information, and demodulates the third information on the resources for transmitting the third information by using the acquired identification information.

14. The apparatus according to claim 12, wherein,
when the receiving unit receives only the identification information transmitted by the eNB, the processing unit determines that the third information is overlapped on the resources for transmitting the first information or the second information of the UE, and demodulates the third information on the resources for transmitting the third information by using the received identification information.

15. The apparatus according to claim 12, wherein,
when the receiving unit receives the indication information and the identification information transmitted by the eNB, the processing unit determines that the third information is overlapped on the resources for transmitting the first information or the second information of the UE, and demodulates the third information on the resources for transmitting the third information by using the received identification information.

16. The apparatus according to claim 12, wherein the identification information is any one of the following:
a Cell-Radio Network Temporary Identifier (C-RNTI);
a Semi-persistent Scheduling-Radio Network Temporary Identifier (SPS-RNTI);
a System Information-Radio Network Temporary Identifier (SI-RNTI);
a Paging-Radio Network Temporary Identifier (P-RNTI); and
a Random Access-Radio Network Temporary Identifier (RA-RNTI).
